Europäisches Patentamt

European Patent Office

Office européen des brevets

(11) Veröffentlichungsnummer: **0 482 474 A2**

## EUROPÄISCHE PATENTANMELDUNG

(21) Anmeldenummer: **91117546.1**

(51) Int. Cl.5: **G01N 21/84**

(22) Anmeldetag: **15.10.91**

(30) Priorität: **19.10.90 DE 4033187**

(43) Veröffentlichungstag der Anmeldung:
**29.04.92 Patentblatt 92/18**

(84) Benannte Vertragsstaaten:
**CH DE FR GB LI**

(71) Anmelder: **Firma Carl Zeiss**

**W-7920 Heidenheim (Brenz)(DE)**

(84) **CH DE FR LI**

(71) Anmelder: **CARL-ZEISS-STIFTUNG, HANDELND ALS CARL ZEISS**

**W-7920 Heidenheim an der Brenz(DE)**

(84) **GB**

(72) Erfinder: **Hohberg, Gerhard, Dr.**
**Hornbergstrasse 13**
**W-7080 Aalen-Dewangebn(DE)**
Erfinder: **Dorsel, Andreas, Dr.**
**Eulenweg 3**
**W-7080 Aalen(DE)**
Erfinder: **Walch, Wilfreid**
**Himmlinger strasse 15**
**W-7080 Aalen 16(DE)**

(54) **Strahlungs- und Empfangsvorrichtung für einen faseroptischen Sensor.**

(57) Die Sende- und Empfangsvorrichtung für einen faseroptischen Sensor besteht aus: 1. einer ersten Strahlungsquelle (L1) deren Strahlung über eine optische Weiche mit einem wellenlängenabhängigen Transmissions- bzw. Reflexionsfilter in die zum Sensorkopf gehende Faser (FA) geleitet wird, wobei die aus der Faser zurückkommende Strahlung über die optische Weiche auf einen ersten Detektor (D1) geleitet wird; 2. einem zweiten Detektor (D2), der an den Strahlungsgang der ersten Strahlungsquelle (L1) dauernd optisch angekoppelt ist, und 3. einer zweiten Strahlungsquelle (L2), welche zeitweise alternativ zur ersten Strahlungsquelle (L1) eingeschaltet wird und deren Strahlung beide Detektoren (D1, D2) ausgesetzt sind.

Fig. 2a

Die vorliegende Erfindung betrifft eine Strahlungs- und Empfangsvorrichtung für einen faseroptischen Sensor nach dem Oberbegriff des Anspruches 1.

Bei faseroptischen Sensoren ist es oft vorteilhaft, die zum Sensorkopf gehende Strahlung und die vom Sensorkopf zurückkommende Strahlung durch ein und dieselbe Faser zu leiten. Dies entspricht dem aus der Nachrichtentechnik bekannten Duplexverfahren (bidirektionale Übertragung), bei dem durch eine Faser Informationen in beiden Richtungen übertragen werden.

Ein bei faseroptischen Sensoren geeigneter Aufbau für die Einkopplung der Strahlung einer Strahlungsquelle in eine Faser und für die Führung der zurückkommenden Strahlung auf einen Empfänger ist aus dem Gebrauchsmuster DE-U1-9 004 633 bekannt. Dort ist bei einer als optische Weiche bezeichneten Vorrichtung auch ein Referenzstrahlengang vorgesehen, mit dem zeitweise die Strahlung der Strahlungsquelle direkt auf den Empfänger geleitet werden kann.

Ein Nachteil dieser bekannten Einrichtung ist, daß man beim Umschalten auf den Referenzstrahlengang und beim Zurückschalten auf den Meßstrahlengang auf mechanisch bewegte Teile angewiesen ist. Nimmt man für den Referenzstrahlengang einen zweiten Empfänger, dann muß man den Nachteil in Kauf nehmen, daß dieser zweite Empfänger und gegebenenfalls der zu ihm gehörende Verstärker nicht exakt die gleichen Eigenschaften hat wie der erste und infolgedessen die Messung ungenau wird.

Der vorliegenden Erfindung liegt daher die Aufgabe zugrunde, eine Strahlungs- und Empfangseinrichtung für einen faseroptischen Sensor anzugeben, die eine möglichst genaue Messung zuläßt und trotzdem ohne bewegte Teile für eine Strahlunterbrechung auskommt.

Die gestellte Aufgabe wird erfindungsgemäß dadurch gelöst, daß ein zweiter Detektor vorgesehen ist, der an den Strahlungsgang der Strahlungsquelle dauernd optisch angekoppelt ist, und daß eine zweite Strahlungsquelle vorgesehen ist, welche zeitweise alternativ zur ersten Strahlungsquelle einschaltbar ist und deren Strahlung beide Detektoren ausgesetzt sind.

Insbesondere bei Sensoren, welche die Abhängigkeit der Abklingzeit von Fluoreszenz- oder Phosphoreszenzprozessen von den zu detektierenden Parametern (Temperatur, Stoffkonzentration etc.) ausnutzen, ist es mit der erfindungsgemäßen Lösung möglich, das Zeitverhalten von Strahlungsquellen und/oder Detektoren im Betrieb zu bestimmen und zu kompensieren. Bei derartigen Sensoren ist z.B. oft der Strahlungslichtpuls gegen den Strompuls durch die Strahlungsquelle verzögert, wobei diese Verzögerung auch noch von Umgebungsparametern, z.B. der Temperatur, abhängig sein kann.

Entsprechend der Erfindung wird ständig ein Teil der Strahlung von der (ersten) Strahlungsquelle auf einen zweiten Detektor gelenkt und damit eine ständige Bestimmung des zeitlichen Verlaufes der Strahlung ermöglicht. Zusätzlich ist eine zweite Strahlungsquelle vorgesehen, die nur von Zeit zu Zeit alternativ zur ersten Strahlungsquelle betrieben wird und deren Strahlung dann beide Detektoren ausgesetzt sind. Mit dieser zweiten Strahlungsquelle wird das relative zeitliche Ansprechverhalten der beiden Detektoren zueinander bestimmt. Außerdem gestattet sie auch sonstige Funktionskontrollen.

Die spektrale Verteilung der zweiten Strahlungsquelle kann derjenigen der ersten Strahlungsquelle möglichst ähnlich sein oder aber deutlich verschieden von dieser gewählt werden. Für die zweite Alternative kann z.B. der Preis der Strahlungsquellen sprechen. Andere Entscheidungskriterien sind z.B. Bauteileinheitlichkeit, Lebensdauer, Zuverlässigkeit und Wirkungsgrad.

In einer vorteilhaften Ausgestaltung der Erfindung ist die zweite Strahlungsquelle nicht durch zusätzliche Bauteile mit den für die erste Strahlungsquelle bereits vorhandenen Bauteilen verbunden, sondern die Strahlung der zweiten Strahlungsquelle gelangt durch die Luft zu den bereits vorhandenen Bauteilen und wird von diesen zu den Detektoren geführt.

In einer anderen vorteilhaften Ausgestaltung sind zwischen der ersten Strahlungsquelle und dem ersten Kollimationsmittel, sowie zwischen dem ersten Detektor und dem zugehörigen Kollimationsmittel Faserstücke oder Lichtleitfasern und außerdem zwischen der ersten Strahlungsquelle und dem zweiten Detektor, sowie zwischen der zweiten Strahlungsquelle und beiden Detektoren Lichtleitfasern vorgesehen.

In einer bevorzugten Ausführungsform ist der Winkel der optischen Weiche kleiner als 30°. Insbesondere wenn die spektralen Verteilungen der ersten Strahlungsquelle und der aus der Faser zurückkommenden Strahlung relativ weit auseinander liegen sind jedoch auch Winkel von 90° möglich, die einen besonders einfachen Aufbau ermöglichen.

Bei einer besonders bevorzugten Ausführungsform sind in einer ersten Ebene eine optische Weiche mit spitzem Winkel, die erste Strahlungsquelle und der erste Detektor angeordnet. In einer zweiten Ebene, die oberhalb und parallel zur ersten Ebene verläuft, befinden sich die zweite Strahlungsquelle und Mittel zur Strahlumlenkung in Richtung der ersten Ebene. Der zweite Detektor ist unter der ersten Ebene und senkrecht auf ihr stehend angeordnet.

Weitere vorteilhafte Ausgestaltungen der Erfindung gehen aus den Erläuterungen zu den Figuren hervor.

Die Erfindung wird im folgenden anhand von in den Figuren 1 bis 6 dargestellten Ausführungsbeispielen näher erläutert. Dabei zeigen:

Figur 1     eine kompakte Ausführung, bei der alle optischen Teile in einer Ebene angeordnet sind;

Figur 2     eine kompakte Ausführung, bei der die optischen Teile in mehreren Ebenen angeordneten sind;

Figur 3     eine Ausführung, bei der die zweite Strahlungsquelle nicht über optische Teile mit den übrigen Teilen der Vorrichtung verbunden ist;

Figur 4     eine zweite Ausführung bei der die zweite Strahlungsquelle nicht über optische Teile mit den übrigen Teilen der Vorrichtung verbunden ist;

Figur 5     eine sehr kompakte Ausführung, bei der die zweite Strahlungsquelle über optische Teile mit den übrigen Teilen der Vorrichtung verbunden ist;

Figur 6     eine Ausführung, bei der die zweite Strahlungsquelle und der zweite Detektor über Lichtleitfasern mit den übrigen Teilen der Vorrichtung verbunden sind; und

Figur 7     Zeitdiagramme zur Erläuterung der Vorgehensweise bei der Auswertung;

Figur 8     ein Schaltschema.

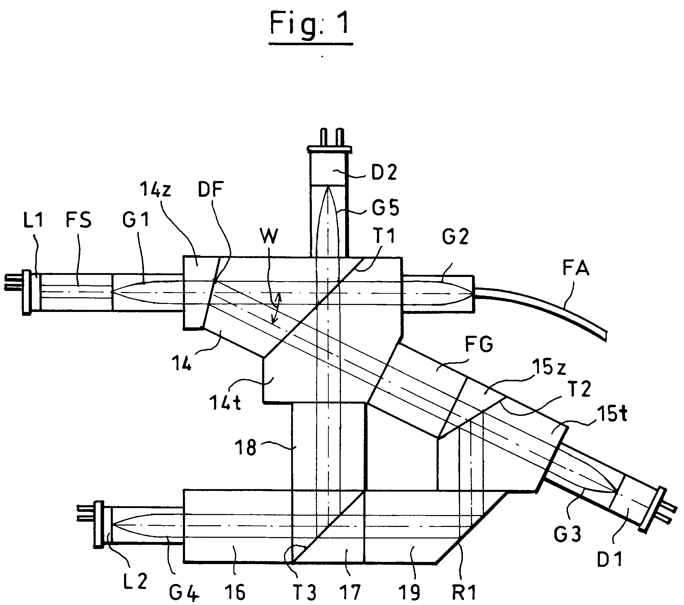

In der Figur 1 ist mit (L1) eine Strahlungsquelle, z.B. eine Leuchtdiode, bezeichnet, die über ein aus der DE-U1-9 004 633 bekanntes Faserstück (FS) oder über eine Lichtleitfaser mit der übrigen Vorrichtung verbunden ist. Das Ende der Faser ist an ein optisches Bauteil zur Kollimierung (G1), z.B. eine GRIN-Linse, angesetzt, welches die aus dem Faserende austretende Strahlung kollimiert. Der kollimierte Strahl geht durch die Glasteile (14z) und (14). Auf einem dieser Glasteile ist auf der an das andere Glasteil angrenzenden Fläche ein geeignetes Filter (DF), z.B. aus dichroitischen Schichten, aufgebracht, welches für den genutzten Wellenlängenbereich der Strahlungsquelle (L1) gut durchlässig ist. Die durchgelassene Strahlung wird durch die GRIN-Linse (G2) auf den Anfang der zum Sensorkopf gehenden Faser (FA) fokussiert.

Die aus der Faser (FA) zurückkommende Strahlung wird von der GRIN-Linse (G2) kollimiert und trifft auf das Filter (DF), welches für die Wellenlänge der zurückkommenden Strahlung ein möglichst großes Reflexionsvermögen hat. Der unter dem Winkel (W) reflektierte Teil geht durch das Farbglasfilter (FG), welches dazu dient, Streulicht mit der Wellenlänge der von der Strahlungsquelle emittierten Strahlung nicht auf den Detektor (D1) gelangen zu lassen. Die GRIN-Linse (G3) fokussiert den Strahl auf den Detektor (D1).

Das Glasteil (14) ist mit dem Glasteil (14t) über eine teildurchlässige Schicht (T1) verbunden, welche eine hohe Durchlässigkeit hat, so daß ein kleiner Anteil der Strahlung von der Strahlungsquelle (L1) über die GRIN-Linse (G5) auf den zweiten Detektor (D2) gelangt und die aus der Faser (FA) zurückkommende Strahlung nur wenig geschwächt wird.

Die Strahlung der zweiten Lichtquelle (L2) wird ebenfalls von einer GRIN-Linse (G4) kollimiert und über das Glasteil (16), den Strahlteiler (17) mit der Teilerschicht (T3) und die Glasteile (18) und (19) auf beide Empfänger (D1) und (D2) geleitet. Die Teilerschicht (T2) zwischen den Glasteilen (15z) und (15t) hat ein geringes Reflexionsvermögen und eine große Durchlässigkeit, so daß die aus der Faser (FA) zurückkommende Strahlung auch von ihr nur wenig geschwächt wird. Das Filter (DF), die Teilerschichten (T1), (T2) und (T3) und die Reflexionsschicht (R1) werden für die Energieverhältnisse einer bestimmten Meßaufgabe aufeinander abgestimmt. Dabei können auch die Glasteile (16), (19) und (18) gegebenenfalls als Farb- oder Graugläser ausgebildet werden.

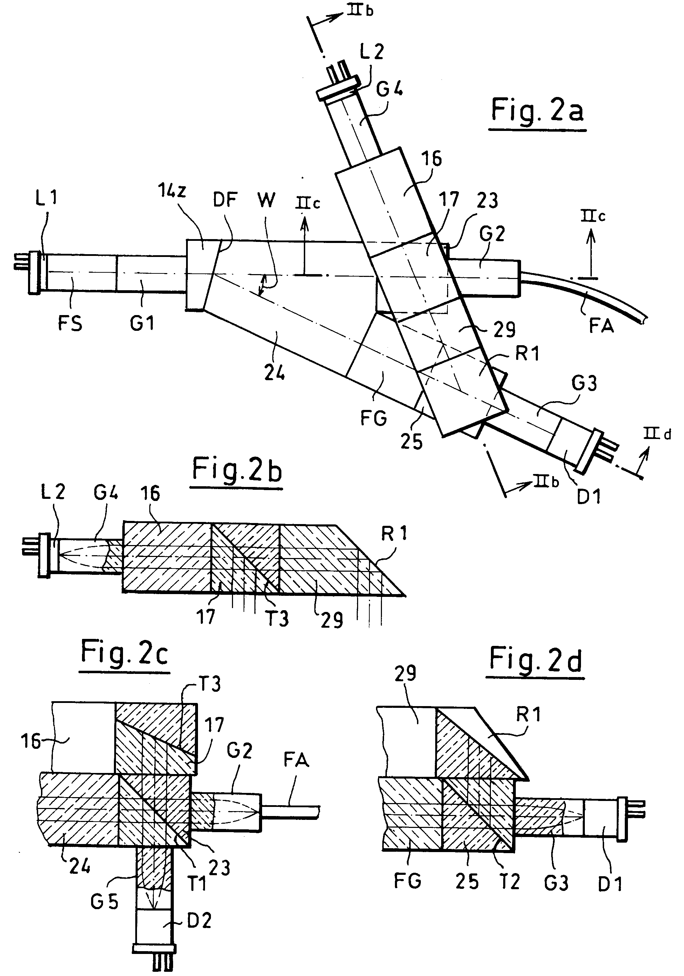

In der Figur 2 sind die einzelnen Elemente nicht nur in einer Ebene wie in der Figur 1 angeordnet, sondern die zweite Strahlungsquelle (L2) ist mit der GRIN-Linse (G4), den Glasteilen (16) und (29) und dem Strahlteiler (17) in einer zweiten Ebene oberhalb der ersten angeordnet. Daher haben die Glasteile (24) und (25) eine andere Form und die Teilerschicht (T1) ist in einem kubischen Strahlteiler (23) enthalten. Der zweite Detektor (D2) seht mit seiner optischen Achse senkrecht auf der ersten Ebene, wie aus der Figur 2c ersichtlich.

Identische Teile sind in allen Figuren mit den gleichen Bezugszeichen gekennzeichnet.

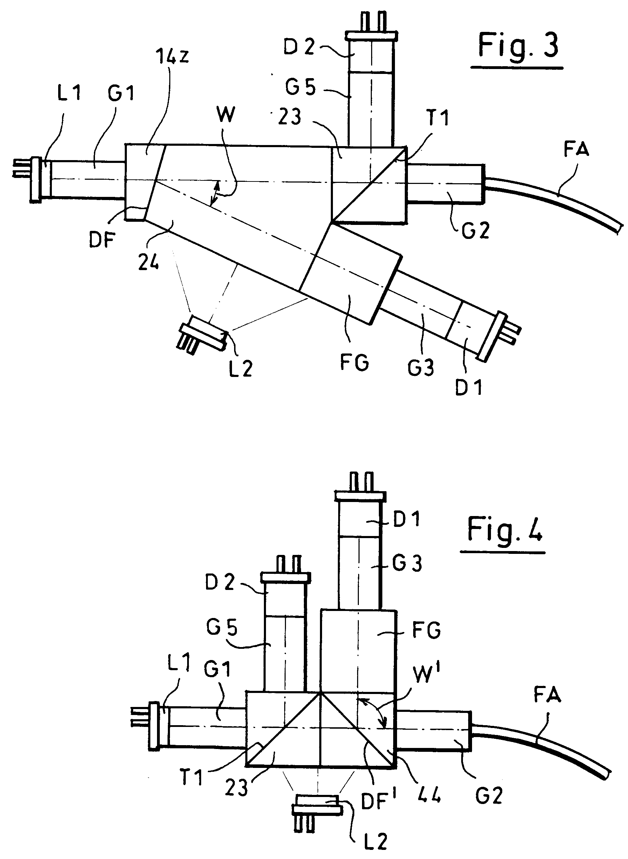

Die Figur 3 zeigt eine Ausführungsform, bei welcher die Strahlungsquelle (L2) nicht über optische Teile mit den anderen Teilen der Vorrichtung verbunden ist. Vielmehr gelangt die Strahlung von ihr über die Luft z.B. in die Teile (24) und (FG) und wird von diesen und die an sie anschließenden Teile (23), (G3) und (G5) zu den Detektoren (D1, D2) geleitet. Dazu sind die Teile (24) und (FG) z.B. mattiert und ein Teil der Strahlung gelangt durch diffuse Streuung zu den Detektoren (D1, D2). Eine günstige Plazierung der Strahlungsquelle (L2) kann durch Ausprobieren leicht ermittelt werden.

In den Figuren 3 bis 5 ist nach der Strahlungsquelle (L1) kein Faserstück angeordnet, weil dies - wie aus den Ausführungen des oben zitierten Gebrauchsmusters hervorgeht - nur bei hohen Anforderungen an die Vorrichtung notwendig ist. Selbstverständlich kann ein derartiges Faserstück aber auch bei den in Figur 3 bis 5 dargestellten Ausführungsbeispielen verwendet werden, und ebenso ist es möglich, dieses Faserstück in den Figuren 1 und 2 wegzulassen, wenn die Anforderungen es nicht erfordern.

In den Figuren 1 bis 3 ist der Winkel (W) der auch als optische Weiche bezeichneten Einheit kleiner als 30°, vorzugsweise beträgt er 15 bis 25°. Ein derartiger möglichst kleiner Winkel ist auch bei Filtern (DF) aus dichroitischen Schichten notwendig, wenn die spektrale Verteilung der Strahlungsquelle (L1) und der aus der Faser (FA) zurückkommenden Strahlung relativ dicht beieinander liegen. Liegen die Strahlungsverteilungen dagegen relativ weit auseinander, dann sind auch Winkel (W') von 90° möglich. Dadurch ergeben sich leichter herzustellende Ausführungsformen, von denen Beispiele in den Figuren 4 bis 6 dargestellt sind.

In den Figuren 4 bis 6 ist der Strahlteiler (23) zur Abzweigung der Vergleichsstrahlung auf den zweiten Detektor (D2) vor dem Filter (DF') in einem kubischen Strahlteiler (44) angeordnet. Dies hat den Vorteil, daß die aus der Faser (FA) zurückkommende Strahlung nicht durch den Strahlteiler für die Vergleichsstrahlung geschwächt wird. Dieser Vorteil kann jedoch nur genutzt werden, wenn die spektrale Verteilung der Strahlung für die beiden Detektoren unterschiedlich sein darf. In der Figur 4 ist die zweite Strahlungsquelle (L2) wieder nicht über optische Teile mit den anderen Teilen der optischen Weiche verbunden. Wie in Fig. 3 können die Oberflächen der der zweiten Strahlungsquelle (L2) gegenüberliegenden Flächen dabei mattiert sein.

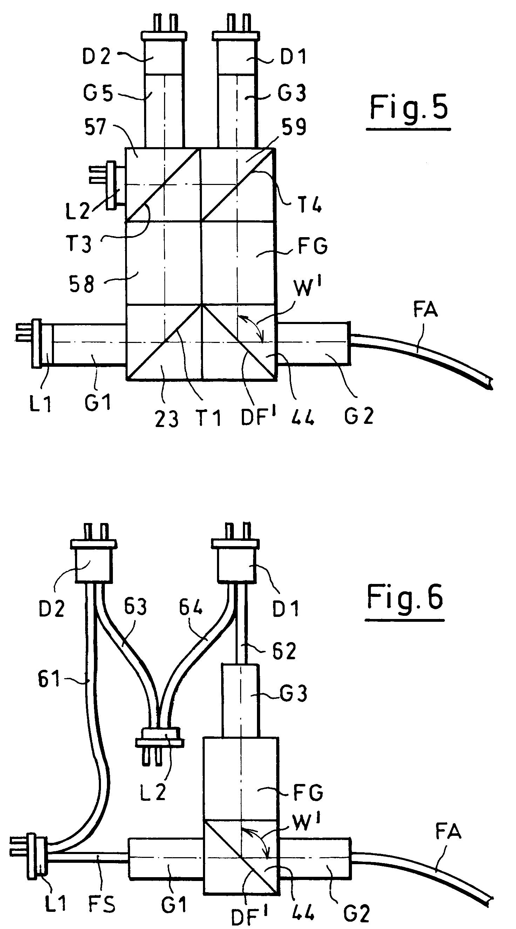

Die Figur 5 zeigt demgegenüber eine Anordnung, bei der die Strahlung der zweiten Strahlungsquelle (L2) über die Teilerwürfel (57) und (59) mit den teildurchlässigen Schichten (T3) und (T4) in die zu den Detektoren (D1) und (D2) gehenden Strahlengänge eingespiegelt wird. Um einen kompakten und möglichst einfachen Aufbau zu erhalten, ist in dem zum Detektor (D2) gehenden Strahlengang ein Glasteil (58) mit der Länge des Farbglases (FG) angeordnet.

Eine weitere vorteilhafte Möglichkeit für den Aufbau der optischen Weiche ist in der Figur 6 dargestellt. Hier besteht der kompakte Teile nur aus dem Strahlteiler (44) mit dem Filter (DF'), dem Farbglas (FG) und den drei GRIN-Linsen (G1), (G2) und (G3). Der Anschluß der Strahlungsquellen (L1) und (L2), sowie der Detektoren (D1) und (D2) erfolgt über Lichtleitfasern oder Faserstücke. Dabei ist das Faserstück (FS) an der Strahlungsquelle (L1) so angesetzt, daß es möglichst viel Strahlung aufnimmt, während der zum Detektor (D2) gehende Lichtleiter (61) asymmetrisch an der Strahlungsquelle (L1) angeordnet ist oder nur durch Überkopplung aus dem Faserstück (FS) Strahlung aufnimmt. Ebenso sind die Lichtleitfaser (61) und das Faserstück (62) an den Detektoren (D1) und (D2) so angesetzt, daß die durch sie übertragenen Strahlungen optimal von den Detektoren aufgenommen werden, während die Strahlungen der Lichtleitfasern (63) und (64) nur zum Teil aufgenommen werden.

Selbstverständlich können die Faserstücke (FS) und (62) in Figur 6 auch durch Lichtleitfasern ersetzt werden. Ferner ist natürlich ein entsprechender Aufbau mit Lichtleitfasern auch für eine spitzwinklige Weiche, wie sie in den Figuren 1 bis 3 mit dem Winkel (W) dargestellt ist, möglich.

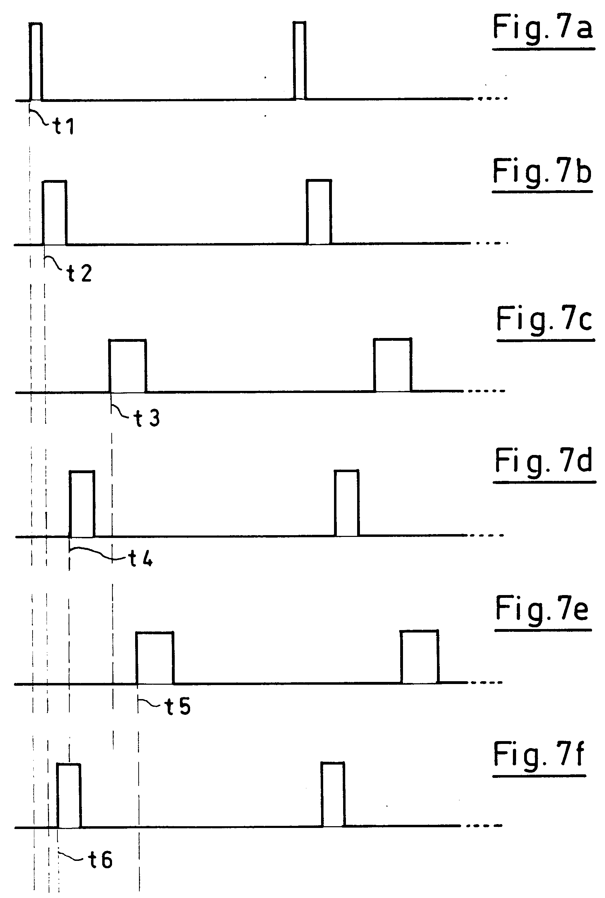

Die Vorgehensweise bei der Auswertung der mit der erfindungsgemäßen Vorrichtung gewonnenen Signale wird im Folgenden anhand eines einfachen Anwendungsfalles beschrieben. Dazu ist in Figur 7 die zeitliche Abfolge der wesentlichen Signale dargestellt. Zum Zeitpunkt t1 wird der Strahlungsquelle (L1) bzw. (L2) ein Strompuls eingeprägt, der in Figur 7a dargestellt ist. Dieser Strompuls bewirkt eine Strahlungsemission, die grob schematisch in Fig. 7b dargestellt ist. Die Strahlungsemission ist im allgemeinen verzögert; sie beginnt daher erst zur Zeit t2; sie kann auch im Zeitablauf verändert (meist verbreitert) sein. Wenn die Strahlung auf einen Lumineszenzsensor geführt wird, wird von diesem eine Sekundärstrahlung emittiert, die nochmals verzögert (t3) und verbreitert sein kann, wie dies in Fig. 7c grob schematisch dargestellt ist. Bei vielen Anwendungen ist die Verzögerung t3-t2 zwischen der primären und der sekundären Strahlung die interessierende Meßgröße.

Bei der Messung der Strahlungspulse mit fotoelektrischen Detektoren tritt im allgemeinen eine weitere Zeitverzögerung im Detektor und in dem folgenden Verstärker auf, die exemplarabhängig ist und zudem zeitlichen Veränderungen unterliegen kann. In Figur 7d ist (grob schematisch) das elektrische Signal eines Detektors dargestellt, das sich ergibt, wenn die Strahlung direkt auf den Detektor fällt. Figur 7e zeigt (grob schematisch) das elektrische Signal, welches durch die Sekundärstrahlung des Sensors entsteht. Würden beide Strahlungspulse kurz hintereinander mit einem Detektor gemessen, dann kann diese zusätzliche Verzögerung als konstant angesehen werden. In diesem Fall wäre die Zeitdifferenz t5-t4 gleich der gesuchten Zeitdifferenz t3-t2. Eine derartige Messung ist jedoch nicht möglich, weil nur entweder das eine oder das andere Signal für die getrennte Auswertung auf den Detektor treffen darf.

Bei der aus dem Gebrauchsmuster DE-U1-9 004 633 bekannten Anordnung wird diese Schwierigkeit gelöst, indem der Detektor nacheinander mit der direkten und der Sensorstrahlung beaufschlagt wird und die Zeit jeweils in Bezug auf die Zeit des Strompulses t1 gemessen wird. Daraus läßt sich die gesuchte Größe als t5-t4 = (t5-t1) - (t4-t1) berechnen.

Bei der erfindungsgemäßen Vorrichtung wird die direkte und die Sensorstrahlung mit unterschiedlichen Detektoren (D1) und (D2) gemessen. Es wird anstelle des in der Figur 7d dargestellten Signals das in Figur 7f dargestellte Signal benutzt. Dabei wird ein Fehler gemacht, weil normalerweise die elektrischen Signale der beiden Detektoren unterschiedliche Verzögerungen zeigen. Wird nun aber mit der zweiten Strahlungsquelle (L2), die beide Detektoren gleichzeitig bestrahlt, eine Zusatzmessung gemacht, die den Zeitunterschied dt = t4-t6 ermittelt, dann ergibt sich die gesuchte Größe als t5-t4 = (t5-t1) - (t6-t1 + dt).

Die Kontrolle von dt erfolgt in gewissen Abständen. Dabei ist keine mechanische Bewegung notwendig; es wird lediglich die Strahlungsquelle (L2) anstelle von (L1) eingeschaltet. Die Auswertung der Signale zur Bestimmung der Zeitdifferenzen erfolgt nach bekannten Verfahren. Der zeitliche Verlauf der Strahlungsemission kann dabei auch andere Formen haben, insbesondere einen periodischen Verlauf, wie dies in der Figur 7 angedeutet ist.

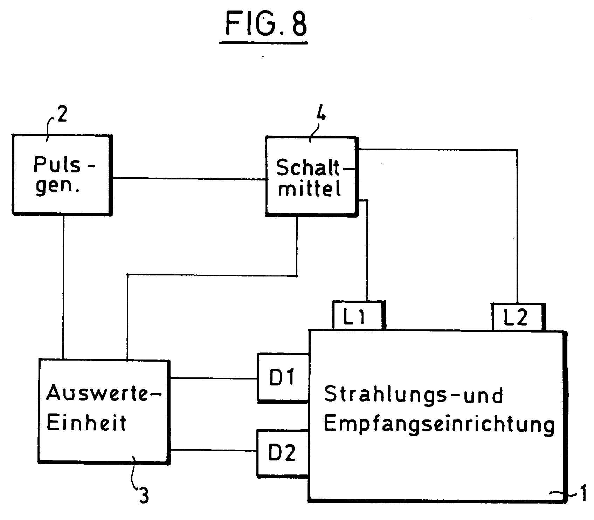

Figur 8 zeigt schematisch eine Schaltung für eine erfindungsgemäße Vorrichtung. Eine Strahlungs- und Empfangsvorrichtung (1) nach einer Ausführung entsprechend Fig. 1-6 mit Lichtquellen (L1) und (L2) und Detektoren (D1) und (D2) ist verbunden mit einem Pulsgenerator (2), einer Auswerteeinheit (3) und einer Schaltvorrichtung (4). Die Auswerteeinheit (3) ermittelt die Laufzeitdifferenz (t5-t6 in Fig. 7) der Lichtpulse, die von den Detektoren (D1) und (D2) empfangen werden. Die Schaltvorrichtung (4) schaltet nach bestimmten Zeitintervallen auf die zweite Lichtquelle (L2) um und beeinflußt gleichzeitig die Auswerteeinheit (3) zur Messung einer Laufzeiteichung (dt = t4-t6 in Fig. 7).

**Patentansprüche**

1. Strahlungs- und Empfangsvorrichtung für einen faseroptischen Sensor, welche die von einer Strahlungsquelle (L1) emittierte Strahlung in eine zum Sensorkopf gehende Faser (FA) leitet und die aus dieser Faser (FA) zurückkommende Strahlung auf einen lichtelektrischen Empfänger (D1) leitet, bestehend aus einem Filter (DF) mit wellenlängenabhängiger Transmission und Reflexion, sowie optischen Bauteilen zur Kollimierung oder Fokussierung (G1, G2, G3), zur Weiterleitung (16, 18, 19) und zur Strahlteilung oder -zusammenführung (14, 17, 24) dadurch gekennzeichnet, daß ein zweiter Detektor (D2) vorgesehen ist, der an den Strahlungsgang der Strahlungsquelle (L1) dauernd optisch angekoppelt ist, und daß eine zweite Strahlungsquelle (L2) vorgesehen ist, welche zeitweise alternativ zur ersten Strahlungsquelle einschaltbar ist und deren Strahlung beide Detektoren (D1, D2) ausgesetzt sind.

2. Vorrichtung nach Anspruch 1, dadurch gekennzeichnet, daß für die Fortleitung der Strahlung der zweiten Strahlungsquelle (L2) zu den Detektoren (D1, D2) keine zusätzlichen optischen Bauteile vorgesehen sind, sondern daß die Strahlungsquelle (L2) durch Luft von den vorhandenen optischen Bauteilen (24, FG, 23, 44) getrennt ist.

3. Vorrichtung nach Anspruch 1, dadurch gekennzeichnet, daß zwischen der ersten Strahlungsquelle (L1) und dem ersten Kollimationsmittel (G1), sowie zwischen dem ersten Detektor (D1) und dem zugehörigen Kollimationsmittel (G3) Faserstücke (FS, 62) oder Lichtleitfasern vorgesehen sind und daß zwischen der ersten Strahlungsquelle (L1) und dem zweiten Detektor (D2), sowie zwischen der zweiten Strahlungsquelle (L2) und den Detektoren (D1, D2) Lichtleitfasern (61, 63, 64) vorgesehen sind.

4. Vorrichtung nach einem der Ansprüche 1 bis 3, dadurch gekennzeichnet, daß der Winkel (W) der optischen Weiche kleiner als 30° ist.

5. Vorrichtung nach einem der Ansprüche 1 bis 3, dadurch gekennzeichnet, daß der Winkel (W') der optischen Weiche gleich 90° ist.

6. Vorrichtung nach Anspruch 1, dadurch gekennzeichnet, daß in einer ersten Ebene eine optische Weiche mit spitzem Winkel (W), die erste Strahlungsquelle (L1) und der erste Detektor (D1) angeordnet sind, daß in einer zweiten Ebene parallel zur ersten Ebene die zweite Strahlungsquelle (L2) und Mittel zur Strahlumlenkung (17, 29) in Richtung der ersten Ebene angeordnet sind und daß der zweite Detektor (D2) senkrecht zur ersten Ebene angeordnet ist (Fig. 2).

# Fig. 1

Fig. 2a

Fig. 2b

Fig. 2c

Fig. 2d

_Fig. 3_

L1  G1  14z  D2  G5  W  23  T1  FA  DF  24  L2  FG  G3  D1  G2

_Fig. 4_

D1  G3  D2  G5  FG  L1  G1  W'  FA  T1  23  DF'  44  G2  L2

Fig.5

Fig.6

EP 0 482 474 A2

Fig. 7a

Fig. 7b

Fig. 7c

Fig. 7d

Fig. 7e

Fig. 7f

10

# FIG.8